# EUROPÄISCHE PATENTANMELDUNG

(11) **EP 1 152 305 A1**
(43) Veröffentlichungstag der Anmeldung: **07.11.2001**
(21) Anmeldenummer: 00109673.4
(22) Anmeldetag: 06.05.2000
(51) Int. Cl.: G04G 9/00

(54) **Analoge Uhr mit Datumsanzeige**

(71) Anmelder: Ford Global Technologies, Inc., Dearborn, Michigan 48136 (US)
(72) Erfinder: Hahne, Dieter, 51467 Bergisch Gladbach (DE)
(74) Vertreter: Bonsmann, Manfred, Dipl.-Ing.

(57) **Zusammenfassung**

Bei der Kombination einer analogen Uhr mit umlaufenden Zeigern (2, 3) einerseits und einer digitalen Anzeigeeinrichtung (5) andererseits erfolgt die Steuerung der Anzeigeeinrichtung (5) so, dass die von ihr dargestellte Zusatzinformation zu keinem Zeitpunkt von den Zeigern verdeckt wird. Vorzugsweise wird hierzu die von den Zeigern überstrichene Fläche in vier Quadranten (I - IV) eingeteilt und die Zusatzinformation in den freien Quadranten dargestellt, über denen sich gerade kein Zeiger befindet.

## Beschreibung

Die Erfindung betrifft eine analoge Uhr mit mindestens einem um einen Drehpunkt umlaufenden Zeiger sowie einer von diesem Zeiger überstrichenen Anzeigeeinrichtung zur Darstellung von Zusatzinformationen.

Eine Uhr der eingangs genannten Art ist aus der US 4 413 915 bekannt. Diese Uhr enthält einen mechanischen Stundenzeiger und Minutenzeiger zur Darstellung der Uhrzeit in analoger Weise sowie eine digitale Anzeigeeinrichtung, welche unter der von den beiden Zeigern überstrichenen Fläche angeordnet ist. Auf dieser Anzeigeeinrichtung können Zusatzinformationen wie insbesondere das Datum digital dargestellt werden. Eine derartige Uhr verbindet die schnell erfassbare und anschauliche analoge Darstellung der Uhrzeit über bewegliche Zeiger mit der präzisen und flexiblen digitalen Darstellung von Zusatzinformationen.

Eine ähnliche Uhr ist auch aus der EP 0 484 821 B1 bekannt. Auch hier wird die Uhrzeit analog durch einen Stunden-, einen Minuten- und einen Sekundenzeiger dargestellt. Zusätzlich ist ein verdeckbares Anzeigefeld im Zifferblatt der Uhr vorgesehen, auf welchem insbesondere Alarm-, Notiz- oder Weckinformationen dargestellt werden können.

Nachteilig bei den genannten kombinierten Uhren ist, dass die hinter den Zeigern angeordneten Anzeigeeinrichtungen je nach Stellung der Zeiger von diesen teilweise verdeckt werden, so dass sich die dargestellte Zusatzinformation dann nicht oder nur erschwert ablesen lässt.

Des weiteren sind Uhren mit einer kombinierten analogen Zeitanzeige und einer Anzeigeeinrichtung für Zusatzinformationen bekannt, bei welchen die Anzeigeeinrichtung außerhalb des von den Zeigern überstrichenen Bereiches angeordnet ist. Bei diesen tritt kein Problem mit einer Verdeckung der Zusatzinformation durch die Zeiger auf, allerdings haben diese Uhren einen erhöhten Platzbedarf durch die separat für den Zeigerbereich und die Anzeigeeinrichtung bereitzustellenden Flächen.

Vor diesem Hintergrund war es Aufgabe der vorliegenden Erfindung, eine analoge Uhr der eingangs genannten Art derart zu verbessern, dass trotz eines kompakten Aufbaus immer eine gute Ablesbarkeit der Zusatzinformationen gewährleistet ist.

Diese Aufgabe wird durch eine analoge Uhr mit den Merkmalen des Anspruches 1 gelöst. Vorteilhafte Ausgestaltungen sind in den Unteransprüchen angegeben.

Die analoge Uhr weist demnach mindestens einen um einen Drehpunkt umlaufenden Zeiger sowie eine vom Zeiger überstrichene Anzeigeeinrichtung zur Darstellung von Zusatzinformationen auf. Die durch den oder die Zeiger analog repräsentierte Information ist vorzugsweise die Uhrzeit, die in Minuten und Stunden und gegebenenfalls auch Sekunden dargestellt wird. Ebenso kann durch den Zeiger jedoch auch eine beliebige andere Information analog repräsentiert werden, zum Beispiel die Tachogeschwindigkeit eines Fahrzeuges. Demnach ist die Bezeichnung "Uhr" nicht auf eine Vorrichtung zur Messung beziehungsweise Darstellung der Zeit beschränkt. Die erfindungsgemäße Uhr ist dadurch gekennzeichnet, dass die Steuerung für die Anzeigeeinrichtung so ausgestaltet ist, dass die Darstellung der Zusatzinformationen jederzeit in einem vom Zeiger (beziehungsweise von den Zeigern) momentan nicht verdeckten Bereich der Anzeigeeinrichtung erfolgt.

Die erfindungsgemäße Uhr weist somit einen kompakten Aufbau auf, bei dem die Zeiger und die Anzeigeeinrichtung eine bestimmte Fläche gemeinsam nutzen. Anders als bei den bekannten kombinierten Uhren wird jedoch vermieden, dass die Zeiger die Zusatzinformationen verdecken und dadurch unleserlich machen, indem eine intelligente Ausnutzung des von den Zeigern unverdeckten Bereiches der Anzeigeeinrichtung vorgesehen wird. Dies geschieht dadurch, dass die Steuerung, welche die momentane Position der Zeiger kennt, die Darstellung der Zusatzinformationen in jene Bereiche der Anzeigeeinrichtung verlagert, die nicht von einem Zeiger verdeckt werden. Da die verhältnismäßig schmalen Zeiger jeweils nur eine kleine Fläche der unter ihnen gelegenen Anzeigeeinrichtung abdecken können, steht in der Regel eine ausreichend große Fläche zur Darstellung der Zusatzinformationen zur Verfügung. Die Verlagerung der Darstellung der Zusatzinformationen kann in kompletten Einheiten von z.B. ganzen Ziffern oder Buchstaben erfolgen. Es ist jedoch auch denkbar, dass die unter einem Zeiger gelegene Darstellung von der Steuerung in Zeigerrichtung zerschnitten wird, und dass die so entstehenden Teile dann um die Breite des Zeigers auseinandergerückt werden.

Gemäß einer bevorzugten Ausgestaltung der Uhr enthält diese zwei Zeiger zur Anzeige von Stunden und Minuten der Uhrzeit. Die von den Zeigern überstrichene Fläche lässt sich entsprechend einem kartesischen Koordinatensystem in vier Quadranten einteilen. Zu einem gegebenen Zeitpunkt können die zwei Zeiger der Uhr sich im selben Quadranten oder in zwei verschiedenen Quadranten befinden. In jedem Falle bleiben mindestens zwei vollständig freie Quadranten der Anzeigeeinrichtung übrig, welche dann von der Steuerung zur Darstellung der Zusatzinformationen verwendet werden können. Dies hat den Vorteil, dass für die Darstellung der Zusatzinformationen immer eine gleichbleibende, auf zwei Quadranten verteilte Fläche bereit steht, so dass für die flexible Darstellung der Zusatzinformation nur die freien Quadrant ausgewählt werden muss. Die Zusatzinformation selbst kann jedoch immer in gleicher Form und Größe dargestellt werden, was auch das Ablesen durch einen Benutzer erleichtert. Selbstverständlich läßt sich dieses Verfahren auch bei Vorhandensein von drei Zeigern (z.B. Sekunden, Minuten und Stunden) oder auch nur einem Zeiger (z.B. Tacho) entsprechend durchführen, wobei dann jederzeit ein bzw. drei freie Quadranten zur Verfügung stehen.

Wenn die darzustellende Zusatzinformation aus zwei Arten von Information besteht, zum Beispiel aus dem Wochentag und dem Datum (Tag und/oder Monat und/oder Jahr), findet die Zuordnung dieser Informationsarten zu den oben genannten freien Quadranten der Anzeigeeinrichtung vorzugsweise nach vorgegebenen Regeln statt. Das heißt, dass die Arten der Zusatzinformation nicht völlig willkürlich beziehungsweise zufällig auf die freien Quadranten verteilt werden, sondern dass diesbezüglich eine Regelmäßigkeit besteht, die es dem Benutzer erleichtert, die Zusatzinformationen aus der Anzeigeeinrichtung trotz der wechselnden Darstellung schnell zu erfassen und abzulesen.

Vorzugsweise wird dabei die erste Art der Information immer in demjenigen der freien Quadranten dargestellt, der vorrangig bei den kleinsten x-Koordinaten und nachrangig bei den größten y-Koordinaten liegt. Das heißt, dass für die Darstellung einer ersten Informationsart wie zum Beispiel dem Wochentag immer zunächst der am weitesten links gelegene freie Quadrant gewählt wird (mit den kleinsten x-Koordinaten) und dass, falls mehrere solcher freien Quadranten vorhanden sind, unter diesen der am weitesten oben gelegene Quadrant (mit den größten y-Koordinaten) gewählt wird. Die erste Informationsart findet sich demnach immer an der Position "links-oben", so dass der Benutzer sie schnell auffinden kann. Selbstverständlich sind auch andere Regeln für die Auswahl der Quadranten denkbar, zum Beispiel solche, bei denen die Informationsarten entsprechend der rechtsläufigen Schreibweise (von links nach rechts und oben nach unten) angeordnet sind.

Die umlaufenden Zeiger der Uhr können mechanische Zeiger sein, welche von einem mechanischen oder elektrischen Uhrwerk angetrieben werden. Vorzugsweise handelt es sich bei den umlaufenden Zeigern jedoch um solche, die von der Anzeigeeinrichtung selbst dargestellt werden. Die Anzeigeeinrichtung kann dabei eine übliche elektro-optische Anzeigeeinrichtung sein, zum Beispiel eine Flüssigkristallanzeige (LCD).

Die auf der Uhr dargestellte Zusatzinformation kann verschiedene Inhalte haben. So kann sie zum Beispiel die durch den oder die Zeiger analog dargestellte Information in digitaler Darstellung wiederholen. Dies erlaubt es dem Benutzer, die Information in seiner bevorzugten Darstellungsart abzulesen und zum Beispiel für eine schnelle und intuitiv erfassbare Ablesung die analoge Darstellung oder für eine möglichst präzise Ablesung die digitale Darstellung zu betrachten. Weiterhin kann die Zusatzinformation das aktuelle Datum (Wochentag, Zahl des Kalendertages, Monats und/oder Jahres) oder die Darstellung einer Temperatur, zum Beispiel der Umgebungstemperatur, enthalten. Wenn die Uhr in einem Kraftfahrzeug eingebaut ist, kann die Zusatzinformation insbesondere auch den Kraftstoffverbrauch, die Fahrzeuggeschwindigkeit, den Kilometerstand beziehungsweise die zurückgelegten Kilometer oder andere in einem Fahrzeug darzustellende Information enthalten.

Im folgenden wird die Erfindung mit Hilfe der Figuren beispielhaft erläutert. Es zeigen:
- Fig. 1: die Anzeigefläche einer erfindungsgemäßen Uhr;
- Fig. 2: die Darstellung von Zusatzinformation auf einer erfindungsgemäßen Uhr bei verschiedenen Zeiger stellungen.

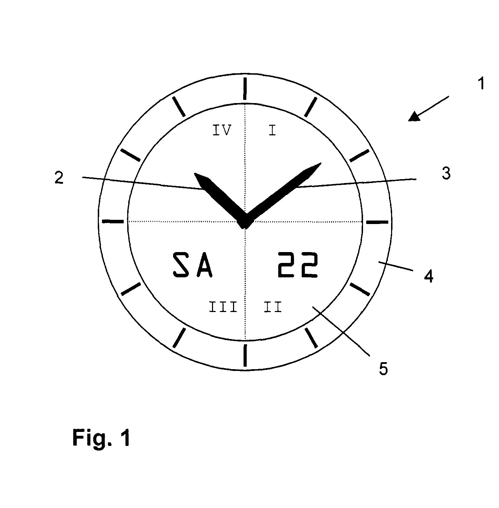

In Figur 1 ist die Anzeigefläche einer erfindungsgemäßen Uhr 1 mit Bezugsziffern versehen dargestellt. Die Uhr 1 weist zunächst wie eine herkömmliche analoge Uhr zur Darstellung der Zeit einen Minutenzeiger 3 und einen Stundenzeiger 2 auf, welche um eine gemeinsame Achse umlaufend drehbar angeordnet sind. Konzentrisch mit der Drehachse der Zeiger 2, 3 ist ein ringförmiger Zifferkranz 4 angeordnet, auf welchem die Position der beiden Zeiger abgelesen beziehungsweise abgeschätzt werden kann.

Unter der von den beiden Zeigern 2 und 3 überstrichenen Fläche ist eine elektro-optische Anzeigeeinrichtung 5, zum Beispiel ein LCD, angeordnet. Auf dieser Anzeigeeinrichtung 5 lässt sich eine Zusatzinformation digital darstellen, bei der es sich im Beispiel um den Wochentag (Samstag, "SA") und den Kalendertag ("22") handelt.

Die Darstellung der Zusatzinformation erfolgt erfindungsgemäß so, dass diese zu keinem Zeitpunkt von den beiden Zeigern 2 und 3 verdeckt wird. Zu diesem Zweck ist die von den Zeigern überstrichene Fläche in vier Quadranten I, II, III, IV entsprechend den Koordinaten eines kartesischen x,y-Koordinatensystems eingeteilt. Da die beiden Zeiger 2 und 3 maximal zwei dieser Quadranten verdecken können, bleiben zu jeder Zeit mindestens zwei freie Quadranten - im dargestellten Beispiel die Quadranten II und III - übrig. In diesen freien Quadranten kann die Zusatzinformation ungehindert und für den Benutzer gut ablesbar dargestellt werden. Die erfindungsgemäße Uhr 1 verbindet somit einen kompakten Aufbau mit einer stets gleichbleibend guten Ablesbarkeit sowohl der analogen als auch der digitalen Information.

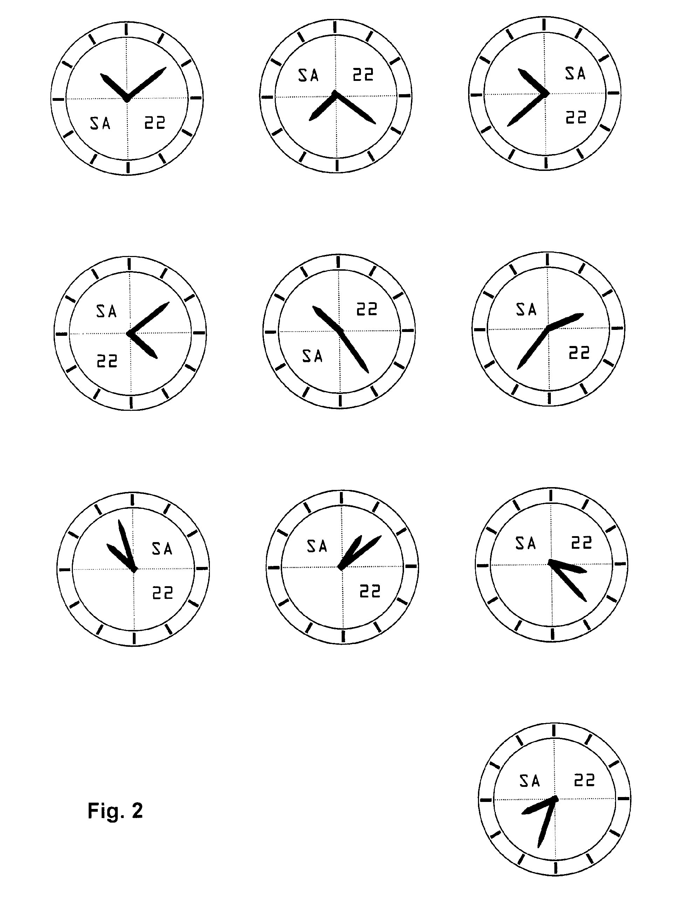

In Figur 2 ist die Anzeige der in Figur 1 dargestellten Uhr für verschiedene Zeigerstellungen gezeigt. Zu erkennen ist, dass die Zuordnung des Wochentages ("SA") und des Kalendertages ("22") zu den freien Quadranten nach bestimmten Regeln erfolgt, um dem Benutzer das Auffinden und Erfassen der Information zu erleichtern. Wenn es um die Zuteilung zwei freier Quadranten geht, können diese Regeln dahingehend formuliert werden, dass vorrangig der Wochentag niemals weiter rechts als der Kalendertag stehen soll. Ist diese Bedingung erfüllt, so soll zusätzlich beachtet werden, dass der Wochentag niemals unter dem Kalendertag stehen soll.

## Patentansprüche

1. Analoge Uhr mit mindestens einem um einen Drehpunkt umlaufenden Zeiger sowie einer von diesem Zeiger überstrichenen Anzeigeeinrichtung zur Darstellung von Zusatzinformationen,
**dadurch gekennzeichnet, dass** die Steuerung der Anzeigeeinrichtung (5) so ausgestaltet ist, dass die Darstellung der Zusatzinformationen jederzeit in einem vom Zeiger (2, 3) momentan nicht verdeckten Bereich (II, III) der Anzeigeeinrichtung erfolgt.

2. Analoge Uhr nach Anspruch 1,
**dadurch gekennzeichnet, dass** sie zwei Zeiger (2, 3) zur Anzeige von Minuten und Stunden enthält, und dass die Darstellung der Zusatzinformationen in denjenigen freien Quadranten (II, III) der Anzeigeeinrichtung (5) erfolgt, in oder über denen sich gerade kein Zeiger befindet.

3. Analoge Uhr nach Anspruch 2,
**dadurch gekennzeichnet, dass** die Zusatzinformation aus zwei Arten von Information, insbesondere aus dem Wochentag und der Datumszahl, besteht, und dass die Zuordnung der Informationsarten zu den freien Quadranten (II, III) nach vorgegebenen Regeln erfolgt.

4. Analoge Uhr nach Anspruch 3,
**dadurch gekennzeichnet, dass** die erste Art der Information immer in demjenigen (III) der freien Quadranten (II, III) dargestellt wird, der vorrangig die kleinsten x-Koordinaten und nachrangig die größten y-Koordinaten hat.

5. Analoge Uhr nach mindestens einem der Ansprüche 1 bis 4,
**dadurch gekennzeichnet, dass** die umlaufenden Zeiger (2, 3) von der Anzeigeeinrichtung (5) dargestellt werden.

6. Analoge Uhr nach mindestens einem der Ansprüche 1 bis 5,
**dadurch gekennzeichnet, dass** die Zusatzinformation mindestens eine der folgenden Größen enthält: das Kalenderdatum; die durch die Zeiger (2, 3) analog dargestellte Information in digitaler Darstellung; die Umgebungstemperatur; den Kraftstoffverbrauch, die Geschwindigkeit, den Kilometerstand oder dergleichen eines Kraftfahrzeuges, in dem die Uhr angeordnet ist.
